# EUROPEAN PATENT SPECIFICATION

(11) **EP 1 780 957 B1**
(45) Date of publication and mention of the grant of the patent: **25.06.2008**
(21) Application number: 05780383.5
(22) Date of filing: 13.07.2005
(51) Int. Cl.: H04J 3/16

(54) **A METHOD FOR MSTP DEVICE SUPPORTING DATA FRAMING PROTOCOLS AND AN APPARATUS THEREOF**
METHODE FÜR EINE MSTP-EINRICHTUNG, DIE DATEN-FRAMING-PROTOKOLLE UNTERSTÜTZT, UND VORRICHTUNG DAFÜR
PROCEDE LA PROSE EN CHARGE DE PROTOCOLES DE DECOUPAGE EN TRAMES PAR UNE UNITE MSTP ET APPAREIL PERMETTANT LA MISE EN OEUVRE DE CE PROCEDE

(30) Priority: 04.08.2004 CN 200410070293
(43) Date of publication of application: 02.05.2007
(73) Proprietor: Huawei Technologies Co., Ltd., Longgang District, Shenzhen Guangdong 518129 (CN)
(72) Inventor: XU, Qianfeng, Shenzhen,Guangdong 518129 (CN)
(74) Representative: Epping - Hermann - Fischer
(86) International application number: PCT/CN2005/001031
(87) International publication number: WO 2006/024213

(56) References cited:
- EP-A- 1 414 173
- EP-A2- 1 253 734
- CA-A1- 2 502 111
- CN-A- 1 288 317
- JP-A- 11 055 264
- US-A1- 2002 141 456
- "Network node interface for the synchronous digital hierarchy (SDH)" ITU-T STANDARD SUPERSEDED (S), INTERNATIONAL TELECOMMUNICATION UNION, GENEVA,, CH, no. G707/Y1322 2000, 13 April 2003 (2003-04-13), XP017400841

## Description

### Field of the Invention

The present invention relates to the field of network communication, and particularly to a method and an apparatus for supporting data framing protocols by a network device.

### Background of the Invention

At present, Multi-Service Transport Platform (MSTP) has become the preferred technology for constructing a multi-service transmission network, typically a Metropolitan Area Network (MAN). MSTP has the ability to map packet data services into Synchronous Digital Hierarchy (SDH) Virtual Containers (VCs) efficiently, and can adopt physical layer protection such that data services can be carried as reliably as Time Division Multiplex (TDM) services. Its reliable abilities in multi-service extension and Quality of Service (QoS) assurance for services have been fully recognized by the operators. In addition, SDH based MSTP refers to a multi-service platform for implementing access, processing and transmission of a TDM service, an Asynchronous Transfer Mode (ATM) service and an Ethernet service simultaneously based on an SDH platform so as to provide unified network management.

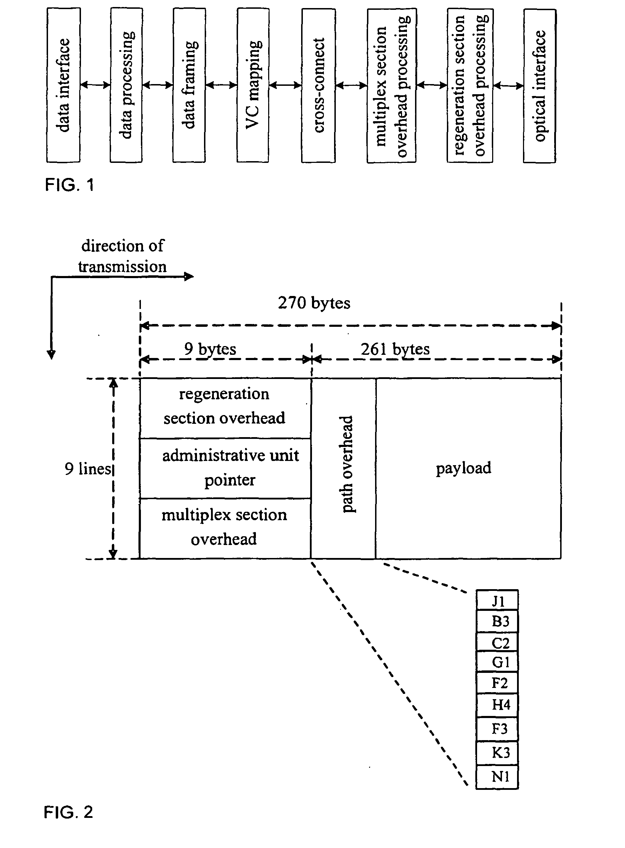

The development of MSTP technologies is mainly embodied in support for Ethernet services and is promoted by QoS requirements for new Ethernet services. Ethernet service data is characterized in burst and variable length, which is very different from SDH frames requiring strict synchronization. Therefore, an appropriate data link layer adaptation protocol should be introduced to accomplish Ethernet data encapsulation, including data buffering, queue scheduling, etc., to map frames into SDH VCs. A block diagram illustrating the functions for carrying data by MSTP for transmission is shown in Fig. 1, in which a series of processes will be performed on data before it is mapped into SDH VCs, including data route searching, data framing. A VC mapping module implements the functions of path overhead processing and rate adaptation.

At present, there are three link layer adaptation protocols for accomplishing data framing encapsulation for Ethernet services, including: High-level Data Link Control / Point-to-Point Protocol (HDLC/PPP); Link-Access Protocol-SDH (LAPS) protocol; and Generic Framing Procedure (GFP) protocol. Each manufacturer can choose a different encapsulation protocol to process services. Because the transport subnets in an MAN are constructed by MSTP devices of different manufacturers, when inter-subnet data services are to be transmitted, inter-communications of the MSTP devices of different manufacturers are required. If the problem of inter-communications in the protocol layer of the MSTP devices of different manufacturers can not be solved properly, the services will have to be terminated as a standard interface respectively, and then relayed. In this way, not only unnecessary cost spending is caused, the complexity in network management is also increased, which limits the development and optimization of the network. If the MSTP devices of different manufacturers can communicate with each other, after having been mapped into SDH VCs, packet data services can be transmitted directly across the SDH networks of different manufacturers and between the devices of different manufacturers. Thus the network planning will be simplified remarkably, the deployment of end-to-end services and the improvement of network maintenance efficiency can be promoted, and large-scale application of the MSTP devices over the multi-service transmission network and the construction of metropolitan area networks will also be promoted.

There are two common methods for an MSTP device to process data framing protocols. One supports single data framing format and the other supports more than one data framing formats. Presently, the data framing protocols need to be configured manually in these two methods, and the software processes the data in an unchanged way according to an appointed framing protocol. For example, in the case that there is a data link between a logical port (PortA) of device A and a logical port (PortB) of device B, and if the data framing protocol of PortA is appointed as LAPS protocol, the data framing protocol of ProtB must be appointed as LAPS protocol as well, so that the encapsulated data sent from device A may be decapsulated correctly by PortB; otherwise, the data can not be recognized correctly due to the errors in decapsulation, resulting in data error or dropping. Such a configuration results in higher technical requirements for an operator, and has the disadvantages of complex configuration operations, low efficiency and poor adaptability of the devices.

EP 1 414 173 A2 discloses a multi-service mapper framer device and methods for operating the same. This device may support the interconnection of synchronous optical networks using the SONET and SDH standards to Ethernet packet networks, and may be capable of mapping up to 2.5 gigabits per second of traffic from a variety of client-side interfaces including time division multiplex T1/E1 and T3/E3 data interfaces, a System Packet interface, and Ethernet packet data interfaces. The device may support a trunk-side connection using a T3/E3 data interface, and the ANSI T1X1.5 Generic Framing Procedure and ITU X.86 Ethernet-over-SONET Recommendation may also be supported.

CA 2 502 111 A1 discloses a method of transmitting data service on synchronous digital network. The method comprises the steps below: adding a resilient packet ring (RPR) processing module after a Ethernet interface; mapping an uplink Ethernet frame from Ethernet interface to a RPR frame by the RPR processing module; mapping the RPR frame to a SDH payload based on a encapsulation protocol; stripping the RPR frame from a destination node at RPR, and recovering to original Ethernet frame. The invention can support the transmitting of the data packet with high efficiencies, and can perform adjustable cycle path and bandwidth statistics multiplexing.

ITU-T G. 707/Y.1322, entitled "Network node interface for the synchronous digital hierarchy (SDH)" is a specification of signal label codes and new text dealing with the transport of a 10 Gbit/s Ethernet WAN PHY signal in VC-4-64c.

### Summary of the Invention

Embodiments of the present invention provide a method and an apparatus for supporting data framing protocols by an MSTP device so as to solve the problems of low efficiency and complex operations caused by configuring data framing protocols manually in the MSTP device in the prior art, such that data framing protocols can be configured with a higher adaptability, and the operability and adaptability of the MSTP device can be improved.

A method for supporting data framing protocols by a Multi-Service Transport Platform device, including:
extracting a path overhead byte identifying a type of data framing protocol and a corresponding logical port number upon receipt of a Synchronous Digital Hierarchy frame, wherein the path overhead byte is configured in structure of the Synchronous Digital Hierarchy frame, and a correspondence relationship
between the path overhead byte and the type of data framing protocol is pre-configured; judging whether the path overhead byte matches a type of data framing protocol corresponding to the logical port number;
processing data of the Synchronous Digital Hierarchy frame according to the matched type of data framing protocol.

An apparatus for supporting data framing protocols by a Multi-Service Transport Platform device, includes: a data framing processing module, a mapping/demapping processing module connected with the data framing processing module, and
particularly, further includes:
a framing protocol processing module, coupled with the data framing processing module and the mapping/demapping processing module respectively, for identifying a data framing protocol and a corresponding logical port number supported by an opposite device which communicates with the Multi-Service Transport Platform device according to a path overhead byte carried in a frame sent from the opposite device, and controlling the data framing processing module to encapsulate transmission data into a frame carrying a path overhead byte identifying the corresponding data framing protocol.

It can be seen from the above technical solutions provided in the embodiments of the present invention, different data framing protocols are identified by path overhead bytes, such that a MSTP device supporting multiple data framing formats does not need to be pre-configured manually and adaptive processing of the data framing protocols can be performed just according to the path overhead bytes in a received SDH frame. The stability of the data framing protocol obtained by the matching process is further enhanced as a result of the state processing mechanism in the embodiments of the present invention. Thus, the operational complexity of the device is reduced; and it does not need to reconfigure the local MSTP device when a fault occurs in an opposite device or the data framing protocols supported by the opposite device is updated, thereby reducing the cost of the operation and maintenance of the device and enhancing the inter-communications between a new device and an old device as well as the devices of different manufacturers.

### Brief Description of the Drawings

Fig.1 is a block diagram illustrating MSTP data processing functions in the prior art;
Fig.2 is a schematic diagram illustrating the structure of an SDH frame;
Fig.3 is a schematic diagram illustrating the multi-frame structure of a first bit in K4 byte of low order path overhead according to an embodiment of the present invention;
Fig.4 is a flow chart of the method according to an embodiment of the present invention;
Fig. 5 is a schematic diagram illustrating the state transfer of a state machine in the method according to an embodiment of the present invention;
Fig.6 is a schematic diagram illustrating a first application example of the method according to an embodiment of the present invention;
Fig.7 is a schematic diagram of a second application example of the method according to an embodiment of the present invention;
Fig.8 is a schematic diagram illustrating the structure of the apparatus according to an embodiment of the present invention;
Fig.9 is a schematic diagram illustrating the structure of the apparatus according to another embodiment of the present invention;

### Detailed Description of the Embodiments

The embodiments of the present invention lie in using path overhead bytes to identify different data framing protocols.

When SDH frame data transmitted from an opposite device is received, a data framing protocol supported by an MSTP device may be matched automatically with a path overhead byte extracted from the SDH frame structure, and the stability of the matched data framing protocol can be guaranteed by using a state processing mechanism.

In order for the inventive solutions to be understood more clearly by those skilled in the art, a further detailed description of the invention will be given below in conjunction with the accompanying drawings and embodiments.

It is known by those skilled in the art that, a standardized information system is adopted in SDH: synchronous transfer modules STM-N (N=1, 4, 16, 64, ...). The most basic module is an STM-1, with a transmission rate of 155.520Mbit/s; 4 STM-1 s can be multiplexed synchronously to build an STM-4, with a transmission rate of 622.080Mbit/s; 16 STM-ls (or 4 STM-4s) can be multiplexed synchronously to build an STM-16, with a transmission rate of 2488.320Mbit/s; and so on.

A concept of 'Virtual Container (VC)' is introduced in SDH, and the so-called Virtual Container refers to an information structure supporting connection of the path layers. When different service signals are put into VCs after being processed, the system only needs to process those VCs, regardless of the particular information structure. Thus it enables a good information transparency while reducing the number of the management entities.

Concatenation is a data encapsulating and mapping technology implemented in Multiple Service Transport Platform (MSTP), wherein multiple VCs can be combined to be used as a single container which maintains the integrality of bit sequences so as to implement transmission of services with a great granularity. The concatenation is divided into continuous concatenation and virtual concatenation. Continuous concatenation refers to concatenating adjacent VCs in the same STM-N data frame into the format of C-4/3/12-Xc to transmit as a whole; and virtual concatenation refers to using VCs (may be in the same route or in different routes) distributed in different STM-N data frames to form the format of VC-4/3/12-Xv, which is a big virtual structure for transmission, according to the method of concatenation.

The structure of an SDH frame is shown in Fig.2.

Section overhead (SOH) and administrative unit pointer (AU-PTR) are placed into 81 bytes which are formed from the first 9 bytes of each line (in the first 9 columns); the next 261 bytes of each line form information payload, 9 bytes of which is path overhead (POH). The overhead implements the operation, administration and maintenance of an SDH network. The section overhead further includes regeneration section overhead (RSOH) and multiplex section overhead (MSOH); and the path overhead includes low order path overhead (LPOH) and high order path overhead (HPOH). The high order path overhead is used for monitoring the performance of a VC path, indicating an alarm state, indicating a signal for maintenance and a multi-frame structure, etc., and the low order path overhead is used for monitoring path status, path trace and a network operator. The high order path overhead is used for monitoring a path of VC4 level, and can be used for monitoring the transmission of 140Mbit/s in an STM-N frame; the low order path overhead is used for implementing the operation, administration and maintenance (OAM) functions for a path of VC12 level, i.e. monitoring the performance of the transmission of 2Mbit/s in an STM-N frame;

According to the ITU G.707 specifications, high order path overhead is arranged in the first column of a VC4 frame, and has 9 bytes, as shown in Fig.2, which are J1, B3, C2, G1, F2, H4, F3, K3, N1, respectively, wherein,
J1: is for tracing the path connection state; an access point identifier of the high order path is sent repeatedly in J1 such that the receiving terminal can verify its continued connection to the intended transmitter according to J1;
B3: is for path bit error monitoring; B3 is used for monitoring the bit error performance of VC4 transmitted in an STM-N frame, i.e. monitoring the bit error performance of 140Mbit/s signals transmitted in an STM-N frame;
C2: is a signal label byte, indicating a multi-fame structure of the VC frame and the attributes of the information payload, such as whether the path is equipped or not, the types and the mapping modes of carried services;
G1: is a path status byte;
F2: is a path user channel byte;
H4: is used as a multi-frame and sequence indicator for VC4 virtual concatenation ;
F3: is a path user channel byte;
K3: is an Automatic Protection Switching (APS) channel byte, which is used for an APS signaling for high order path level protection;
N1: is a byte for network operators, which is used for a specific administrative purpose.

Low order path overhead (LPOH) is arranged in the first byte of each VC12 basic frame, and there are 4 bytes in a low order path overhead group, which are V5, J2, N2, K4, respectively, wherein,
V5: is a path status and signal label byte, used for bit error detection, signal labeling and V12 path status indication, and having the functions of the high order path overhead G1 and C2;
J2: is a VC12 path trace byte;
N2: is a byte for network operators;
K4: is used as a multi-frame and sequence indicator for VC12 virtual concatenation.

Embodiments of the present invention implement the adaptive processing of data framing formats by an MSTP device using the SDH path overhead bytes.

In a high order path, the C2 byte indicates the attributes of the information payload in an SDH frame. The C2 byte is used for indicating a multi-frame structure of the frame and the attributes of the information payload, such as whether the path is equipped or not, the types and the mapping modes of carried services. The code format of the C2 byte is shown in the following Table 1.

**Table 1:**

| High bits 1 2 3 4 | Low bits 5 6 7 8 | Hex code | Description |
|---|---|---|---|
| 0000 | 0000 | 00 | No signal equipped |
| 0001 | 0110 | 16 | HDLC/PPP frame signal mapping |
| 0001 | 1000 | 18 | HDLC/LAPS frame signal mapping |
| 0001 | 1011 | 1B | GFP frame signal mapping |

In a low order path, the V5 byte defines an extension attribute, and a 32-frame multi-frame formed by the first bit of the K4 byte is used to extend the payload information. The code structure of V5 is shown in the following Table 2

**Table 2:**

| Bit Error Monitoring (BIP-2) | | Remote Error Indication (REI) | Remote Failure Indication (RFI) | Signal Label | | | Remote Defect Indication (RDI) |
|---|---|---|---|---|---|---|---|
| 1 | 2 | 3 | 4 | 5 | 6 | 7 | 8 |

Specifically,
Bit Error Monitoring: a parity code BIP-2 is interposed between the transmitted bits, wherein the first bit should be set as such that the parity of all the odd bits of all the bytes within the previous VC-12 multi-frame is an even; the second bit should be set as such that the parity of all the even bits of all the bytes within the previous VC-12 multi-frame is an even;
Remote Error Indication: 1 is sent to the source of the VC12 path when the BIP-2 detects a block error; otherwise, 0 is sent;
Remote Failure Indication: where 1 is sent when a fault occurs, and 0 is sent when no fault occurs;
Signal Label: denotes whether the payload is equipped or not and the mapping mode; there are 8 binary values for 3 bits, wherein:
000: indicates VC path is unequipped;
001: indicates VC path is equipped, but no payload is specified;
010: is indicative of asynchronous floating mapping;
011: is indicative of bit synchronous floating;
100: is indicative of byte synchronous floating;
101: is a signal identifier defined in the latest ITU G.707;
110: is a 0.181 (a device which estimates the bit error performance of an STM-N interface, suggested by ITU-T) test signal;
111: a VC Alarm Indication Signal (VC-AIS);

Remote Defect Indication: where 1 is sent in the case of failed receipt, and 0 is sent in the case of successful receipt.

It can be seen from the structure of V5 in table 1 that, bit5~bit7 are used to denote the signal label of a low order path; a received value of '101' indicates that the signal label for the path is extended, i.e., the extended signal label of the first bit of K4 is valid.

Because there are only a few bytes of low order overhead, i.e. 4 bytes, many functions are implemented by a multi-frame formed by extending different bits in the same byte. A 32-bit multi-frame formed by extending bit1 of K4 is defined as signal label; a 32-bit multi-frame formed by extending bit2 of K4 is defined as low order virtual concatenation; bit3 and bit4 of K4 are used for protection switching.

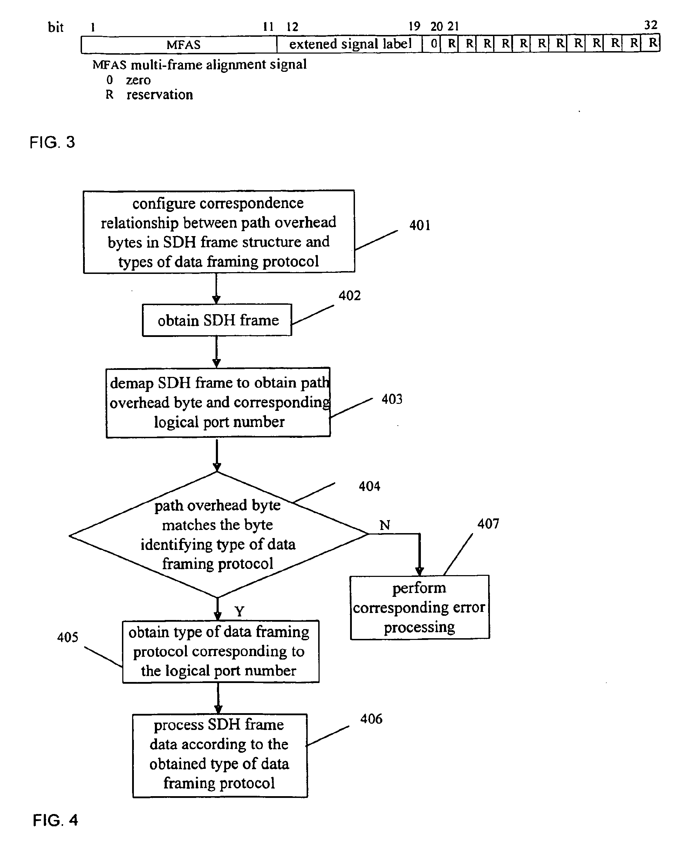

The definition of a low order data framing protocol is made in the extended signal label of the first bit of K4 byte, wherein the multi-frame structure of bit1 in K4 is shown in Fig. 3.

MFAS is a multi-frame alignment signal□'0' in the byte indicates 0 bit is filled, and 'R' denotes a reservation bit.

The extended signal label is defined in bit12~bit19 of the multi-frame, and the definition of the types of the framing protocols is shown in the following Table 3:

**Table 3:**

| High bits b12 b13 b14 b15 | Low bits b16 b17 b18 b19 | Hex code | Description |
|---|---|---|---|
| 0000 | 0000 | 00 | No signal equipped |
| 0000 | 1010 | 0A | HDLC/PPP frame signal mapping |
| 0000 | 1011 | 0B | HDLC/LAPS frame signal mapping |
| 0000 | 1101 | 0D | GFP frame signal mapping |

In this way, the contents of the payload carried by an SDH path can be determined according to the different definitions of high and low order path overhead bytes. After the framing protocol of the path is determined, different processing can be implemented according to different protocols.

Fig.4 is a flow chart of the method according to an embodiment of the present invention, which includes the following steps.

Step 401: a correspondence relationship is configured between a path overhead bytes in the structure of an SDH frame and a type of data framing protocol.

In a high order path, the type of data framing protocol is identified by the signal label byte C2 in high order path overhead; in a low order path, the type of data framing protocol is identified by the signal label byte V5 and the automatic protection switching byte K4 in low order path overhead. A particular identifying method is explained above in detail and will not be repeated here.

For Synchronous Optical Network (SONET), a correspondence relationship between a high order path overhead byte or low order path overhead byte and a type of data framing protocol may also be configured similarly to SDH, and the detailed description thereof will be omitted here.

### Upon receipt of data, first go to

Step 402: a Synchronous Digital Hierarchy (SDH) frame is obtained.
Then, step 403: the SDH frame is demapped to obtain a path overhead byte and a corresponding logical port number.

For different SDH transmission bandwidths, the VCs for carrying data are different. The high order path overhead or the low order path overhead in the SDH frame structure can be extracted according to the actual situation. For example, for a VC4 level path, the path monitoring is performed through high order path overhead, and here, the signal label byte C2 and the H4 byte identifying the logical port number in high order path overhead need to be obtained; and for a VC12 level path, the path monitoring is performed through low order path overhead, and here, the signal label byte V5 and the K4 byte identifying a logical port number in low order path overhead need to be obtained.

Then, step 404: it is judged whether the path overhead byte matches the byte identifying the type of data framing protocol.

Although the definition of using high order path overhead byte C2 to identify a signal and the definition of using V5 byte and K4 byte in low order path in combination to identify a signal have been described above, for better understanding, they are described again as follows.

For a high order path overhead byte,
C2=OOH indicates that no signal is equipped, i.e., no signal is equipped in a VC4 path, and here an all '1' indication needs to be inserted in payload Tributary Unit Group 3 (TUG3) of this VC4 path, and an alarm indicating the high order path is unequipped occurs in the device;
C2=16H is indicative of HDLC/PPP frame signal mapping;
C2=18H is indicative of HDLC/LAPS frame signal mapping;
C2=1BH is indicative of GFP frame signal mapping.

Therefore, for a path of VC4 level, it is judged whether the extracted value of C2 byte is the same as the value defined above. If not same, it indicates that the encapsulation protocol for the received data does not match the data framing protocol supported by the local device, i.e., the local device does not support this encapsulation format protocol and can not communicate normally with an opposite device; if the extracted value of C2 byte is the same as any one of the above three values identifying the data framing protocols, it indicates that the encapsulation protocol for the received data matches the data framing protocol supported by the local device, i.e., the local device supports this encapsulation format protocol and can process the data according to this protocol format.

Similarly, for low order overhead bytes, the values of the extended signal label of bit12~bit19 in the multi-frame formed from K4 bit1 when bit5~bit7 identifying a signal in V5 is '101' are obtained, wherein when this 8-bit label is:
00H, it indicates that no signal is equipped;
0AH, it is indicative of HDLC/PPP frame signal mapping;
0BH, it is indicative of HDLC/LAPS frame signal mapping;
0DH, it is indicative of GFP frame signal mapping.

Therefore, for a path of VC12 level, it is judged whether the extracted value of the above byte in the path overhead is the same as the value defined above. If not same, it indicates that the encapsulation protocol for the received data does not match the data framing protocol supported by the local device, i.e., the local device does not support this encapsulation format protocol and can not communicate normally with an opposite device; whereas, if the extracted value of the above byte in the path overhead is the same as any one of the above three values identifying the data framing protocols, it indicates that the encapsulation protocol for the received data matches the data framing protocol supported by the local device, i.e., the local device supports this encapsulation format protocol and can process the data according to this protocol format.

If there is a match, go to step 405: the type of data framing protocol corresponding to the logical port number is obtained according to the matched path overhead byte.

Then, go to step 406: the SDH frame data is processed according to the obtained type of data framing protocol.

If there is no match, go to step 407: corresponding error processing is performed.

It is known by those skilled in the art that in the process of data transmission, a line fault or another unexpected reason may cause the data to be received with error. Therefore, in order to guarantee that a stable data framing protocol can be obtained according to the extracted path overhead byte, a state processing mechanism is provided in an embodiment of the present invention, the detailed description of which is as follows.

Firstly, a data framing state machine is established. The data framing state machine includes 4 different states, which are idle state, unlocked state, synchronous state, locked state, respectively. The definition of each state is as follows.
(1) Idle state: if the value of an extracted byte identifying the data framing protocol is zero, the path is in an idle state.
(2) Unlocked state: if the extracted framing protocol does not match a defined type of framing protocol, the path is in an unlocked state.
(3) Synchronous state: if the extracted framing protocol matches a defined type of framing protocol, it enters into a synchronous state;
(4) Locked state: if it is in a synchronous state, and the matching results for the subsequent N times are the same, it enters into a locked state (N may be any pre-set integer, and it is suggested to be 3). Namely, after the state machine enters into the synchronous state, SDH frames are still being received. Each time the SDH frame data is received, a path overhead byte thereof needs to be extracted, and it is judged whether the extracted framing protocol matches a defined type of framing protocol. If all the results of judgments for a predetermined number of times indicate a match, the state of the state machine will be transferred from the synchronous state to the locked state.

An initial state of the state machine needs to be set to an idle state.

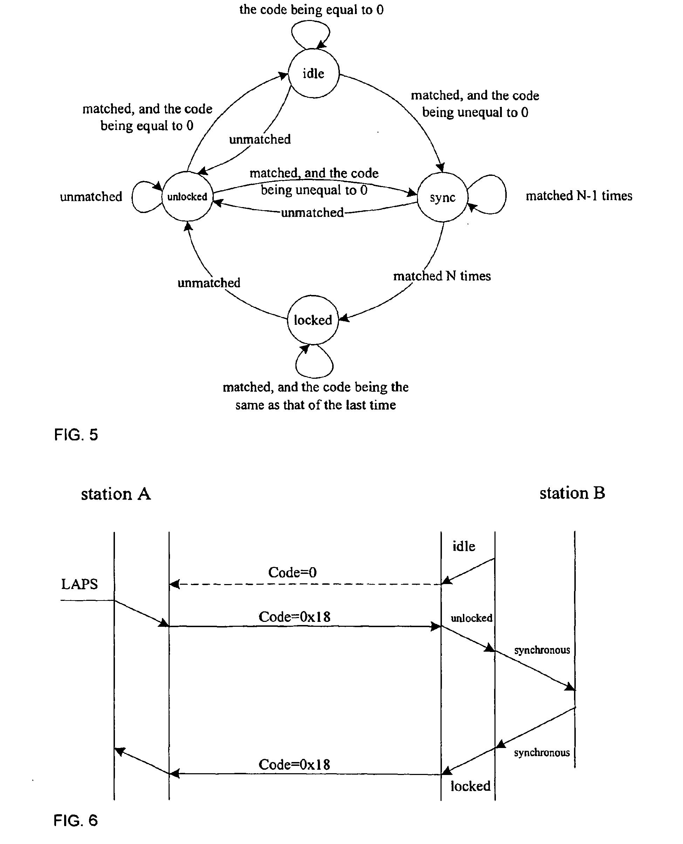

The transfer among various states can be shown in Fig.5.

Then, the current state of the state machine is obtained. The current state of the state machine may be one of the above four states: idle state, unlocked state, synchronous state, locked state.

Here, the framing protocol for data encapsulation should be determined according to the current state of the state machine. If the state machine is in a locked state, the transmission data is encapsulated according to the obtained type of data framing protocol, and a path overhead byte which identifies the type of data framing protocol is inserted into a path corresponding to the logical port number; otherwise, a path overhead byte indicating no signal is equipped is inserted into the path corresponding to the logical port number.

For better understanding, an example is given as follows.

Firstly, Fig.6 illustrates the process of adaptive processing of the supported protocols, which is performed at different stations.

Assume that there are two stations A and B, wherein station A uses an old device, and can not support adaptive processing of protocols, and only support the LAPS protocol; and station B can support adaptive processing.

In an initial state, station B is in an idle state, and the overhead byte of signal label is 0. When station A initiates a data transmission, and the framing protocol signaling received by station A is LAPS, and the signal label overhead byte is set to 0x18 (assuming a high order path); when receiving the signal label, and detecting that it is not zero, station B enters into an unlocked state. Station B performs adaptation to the known framing protocol codes for the signal label. If the frame protocol is adapted to be the LAPS protocol, station B enters into a synchronous state, and a synchronization counter is started at the same time. When the synchronization counter equals N (N=3), the state is transferred into a locked state, the framing protocol is locked to the LAPS protocol, and the signal label code 0x18 corresponding to the LAPS protocol is inserted down into the SDH path overhead. Thus the process of adaptive processing of framing protocols is finished.

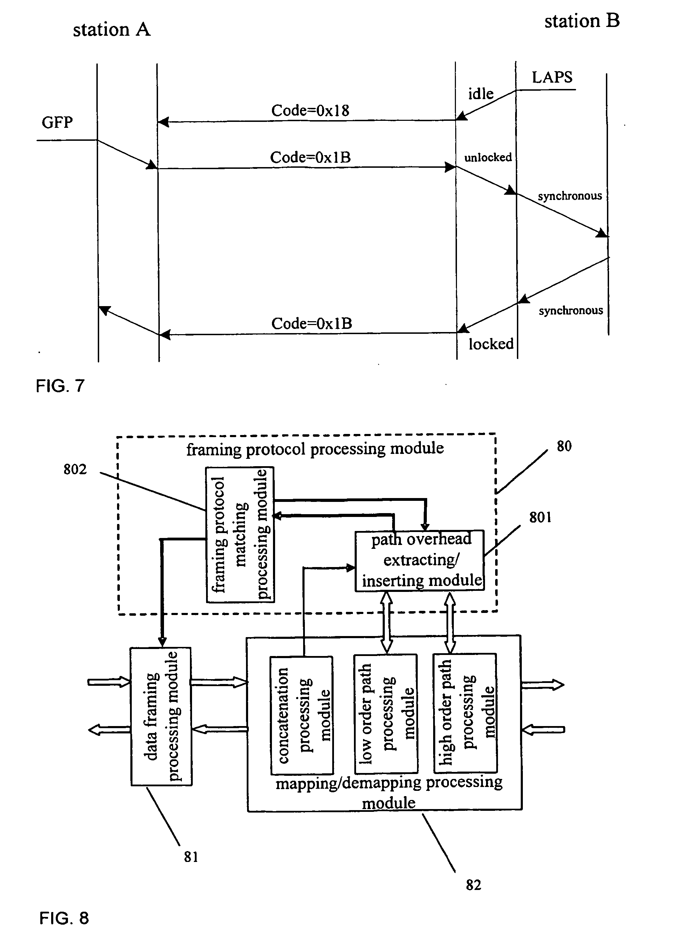

Fig.7 illustrates the process of adaptive processing of the supported protocols by an MSTP device after an opposite device communicating with this MSTP device has been updated.

If the device of station A is faulty and replaced by a new device, in which a line card supports the GFP framing protocol, the operator only needs to consider the device of station A, and does not need to modify the configurations of station B. The adaptation and locking of the framing protocol can be performed automatically by station B. The process for performing the adaptive processing of the framing protocols is the same as that illustrated in Fig.7.

Fig.8 shows a schematic diagram illustrating the structure of a first embodiment of the apparatus according to the invention,

The apparatus according to the first embodiment includes: a data framing processing module 81, a mapping/demapping processing module 82 connected with the data framing processing module 81, a framing protocol processing module 80 connected with the data framing processing module 81 and the mapping/demapping processing module 82 respectively.

The data framing processing module is used for encapsulating and decapsulating the transmission data and received data according to a corresponding data framing protocol;
the mapping/demapping processing module is used for mapping the data which has been encapsulated by the data framing processing module into VCs in an SDH frame, or demapping the received data from VCs in an SDH frame.

In order to be cooperative with the processing of concatenated services, a concatenation processing module, a low order path overhead processing module and a high order path overhead processing module can be configured in the mapping/demapping processing module for the management of path when different levels of VCs are concatenated.

The framing protocol processing module is used for identifying a data framing protocol supported by an opposite device communicating with the local MSTP device, and controlling the framing protocol processing module to encapsulate transmission data according to the corresponding data framing protocol.

In order to implement the adaptive processing of data framing protocols by an MSTP device, the framing protocol processing module includes: an overhead extracting/inserting module 801 and a framing protocol matching processing module 802.

When demapping a received SDH frame, the mapping/demapping processing module sends the path overhead bytes in the SDH frame to the path overhead extracting/inserting module. The path overhead extracting/inserting module extracts a byte (C2 byte in a high order path, and V5 byte and K4 byte in a low order path) identifying the signal encapsulation protocol in the path overhead, and sends the extracted label byte to the framing protocol matching processing module. The framing protocol matching processing module processes the label byte, and judges whether the data framing protocol identified by the byte matches a data framing protocol supported by the local MSTP device. If there is no match, an alarm indicative of no match will be reported to the control plane, and at the same time a message indicative of no match will be sent to the data framing processing module and the path overhead extracting/inserting module. The corresponding processing will be performed on the received data and the transmission data by the data framing processing module and the path overhead extracting/inserting module. If there is a match, the matched data framing protocol will be sent to the data framing processing module and the path overhead extracting/inserting module.

The data framing processing module encapsulates the transmission data according to the received data framing protocol. Then, the encapsulated data will be mapped into SDH VCs by the mapping/demapping processing module, and a path overhead byte identifying the data framing protocol will be inserted into a corresponding path by the path overhead extracting/inserting module.

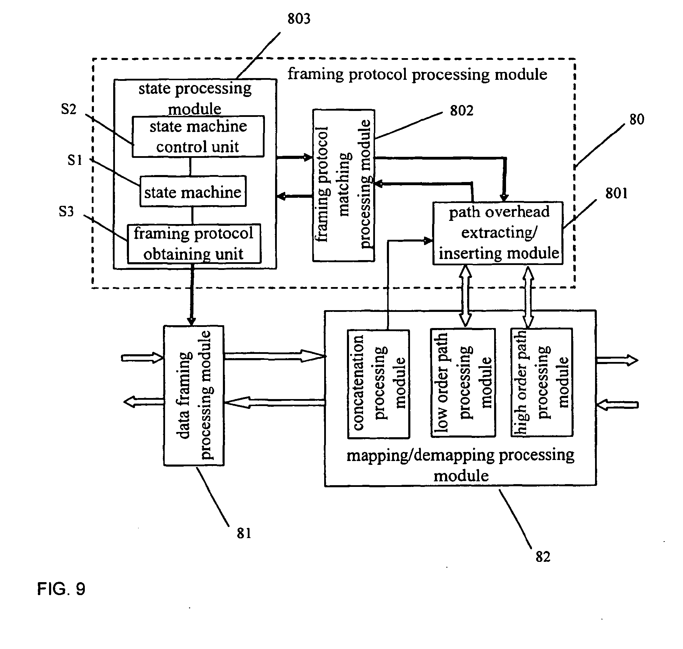

Fig.9 shows a schematic diagram illustrating the structure of a second embodiment of the apparatus according to the invention.

In order to obtain a stable data framing protocol, the framing protocol processing module further includes a state processing module 803, which is used to obtain a stable data framing protocol according to the result of the judgment by the framing protocol matching processing module. The obtained stable data framing protocol will be sent to the data framing processing module and the framing protocol matching processing module.

The state processing module obtains the stable data framing protocol through a state machine S1 therein, along with a state machine control unit S2 and a framing protocol obtaining unit S3, an implementation process of which is as follows.

The result of judging whether the data framing protocols match with each other is sent from the framing protocol matching processing module to the state machine control unit, and the state machine control unit controls the state machine to display the state of the data framing protocol according to the result. A state transfer process of the state machine is shown in Fig. 5. The stable data framing protocol is obtained by the framing protocol obtaining unit according to the displayed state of the state machine and the judgment result given by the framing protocol matching processing module. When the state machine is in a locked state, and all the results of the judgments of a predetermined number of subsequent consecutive times given by the framing protocol matching processing module are indicative of a match, the obtained data framing protocol is considered as stable. Here, the framing protocol obtaining unit obtains the matched data framing protocol, and sends it to the data framing processing module and the framing protocol matching processing module.

The transmission data is encapsulated by the data framing processing module according to the received data framing protocol, and meanwhile, the received data framing protocol is transmitted to the path overhead extracting/inserting module from the framing protocol matching processing module. Thus, when the encapsulated data are mapped into SDH VCs by the mapping/demapping processing module, a path overhead byte identifying the data framing protocol is inserted into a corresponding path by the path overhead extracting/inserting module.

Although the invention has been illustrated and described with reference to certain preferred embodiments, it will be apparent to those skilled in the art that various modifications and changes can be made without departing from the scope of the invention which are intended to be defined by the appended claims and their equivalents.

## Claims

1. A method for supporting data framing protocols by a Multi-Service Transport Platform device, comprising:
extracting (403) a path overhead byte identifying a type of data framing protocol and a corresponding logical port number upon receipt of a Synchronous Digital Hierarchy frame, wherein the path overhead byte is configured in structure of the Synchronous Digital Hierarchy frame, and a correspondence relationship between the path overhead byte and the type of data framing protocol is pre-configured (401);
judging (404) whether the path overhead byte matches a type of data framing protocol corresponding to the logical port number;
processing (406) data of the Synchronous Digital Hierarchy frame according to the matched type of data framing protocol.

2. The method according to claim 1, wherein the step of extracting comprises:
obtaining the Synchronous Digital Hierarchy frame;
demapping the Synchronous Digital Hierarchy frame to obtain the path overhead byte in the Synchronous Digital Hierarchy frame and the corresponding logical port number.

3. The method according to claim 1, wherein the step of judging comprises:
if the value of the path overhead byte extracted from the Synchronous Digital Hierarchy frame is not equal to the value of a byte identifying the type of data framing protocol, judging that the path overhead byte does not match the byte identifying the type of data framing protocol;
otherwise, judging that the path overhead byte matches the byte identifying the type of data framing protocol.

4. The method according to claim 1, further comprising:
establishing a data framing state machine, states of the state machine comprising idle state, unlocked state, synchronous state, locked state;
obtaining a current state of the state machine;
encapsulating transmission data according to the current state of the state machine.

5. The method according to claim 4, wherein the step of establishing comprises: setting an initial state of the state machine to an idle state.

6. The method according to claim 5, wherein the step of obtaining comprises:
when the path overhead byte extracted from the Synchronous Digital Hierarchy frame is 0, setting the state machine to an idle state;
when the path overhead byte does not match a byte identifying the type of data framing protocol, setting the state machine to an unlocked state;
when the path overhead byte matches the byte identifying the type of data framing protocol, setting the state machine to a synchronous state;
when the state machine is in the synchronous state, performing step b to step c a predetermined number of times; if all path overhead bytes obtained the predetermined number of times are the same as a path overhead byte obtained just before the state machine entered into the synchronous state, setting the state machine to a locked state; otherwise setting the state machine to a synchronous state.

7. The method according to claim 6, wherein the step of encapsulating comprises:
if the state machine is in a locked state, encapsulating the transmission data according to an obtained type of data framing protocol, and inserting the path overhead byte identifying the type of the data framing protocol into a path corresponding to the logical port number;
otherwise, inserting a path overhead byte indicating that no signal is equipped into the path corresponding to the logical port number.

8. The method according to claim 1, wherein the step of configuring comprises:
in a high order path, setting a signal label byte C2 in high order path overhead to correspond to the type of data framing protocol;
in a low order path, setting a signal label byte V5 and an automatic protection switching byte K4 in low order path overhead to correspond to the type of data framing protocol.

9. The method according to claim 8, wherein the step of extracting comprises:
obtaining the Synchronous Digital Hierarchy frame;
demapping the Synchronous Digital Hierarchy frame to obtain the path overhead byte in the Synchronous Digital Hierarchy frame and the corresponding logical port number.

10. The method according to claim 8, wherein the step of judging comprises:
if the value of path overhead byte extracted from the Synchronous Digital Hierarchy frame is not equal to the value of a byte identifying the type of data framing protocol, judging that the path overhead byte does not match the byte identifying the type of data framing protocol;
otherwise, judging that the path overhead byte matches the byte identifying the type of data framing protocol.

11. An apparatus for supporting data framing protocols by a Multi-Service Transport Platform device,
comprising:
a data framing processing module (81), a mapping/demapping processing module (82) connected with the data framing processing module (81),
and further comprising:
a framing protocol processing module (80), coupled with the data framing processing module (81) and the mapping/demapping processing module (82) respectively, for identifying a data framing protocol and a corresponding logical port number supported by an opposite device which is configured to communicate with the Multi-Service Transport Platform device according to a path overhead byte carried in a frame sent from the opposite device, and controlling the data framing processing module to encapsulate transmission data into a frame carrying a path overhead byte identifying a corresponding data framing protocol.

12. The apparatus according to claim 11, wherein the framing protocol processing module (80) comprises:
a path overhead extracting/inserting module (801), for inserting a path overhead byte identifying the data framing protocol when the mapping/demapping processing module (82) maps the transmission data, and obtaining the path overhead byte identifying the data framing protocol when the mapping/demapping processing module (82) demaps the received data;
a framing protocol matching processing module (802), coupled with the path overhead extracting/inserting module (801), for judging whether the data framing protocol identified by the path overhead byte extracted by the path overhead extracting/inserting module (801) configured to match a data framing protocol supported by the Multi-Service Transport Platform device, and sending the matched data framing protocol to the data framing processing module (81) and the path overhead extracting/inserting module (801).

13. The apparatus according to claim 12, wherein the framing protocol processing module (82) further comprises:
a state processing module (803), for obtaining a stable data framing protocol according to the result of the judgment by the framing protocol matching processing module (802), and sending the obtained stable data framing protocol to the data framing processing module (81) and the framing protocol matching processing module (802).

14. The apparatus according to claim 13, wherein the state processing module (803) includes:
a state machine (S1), for displaying a state of data framing protocol;
a state machine control unit (S2), for controlling the state displayed by the state machine (S1) according to the result of the judgment by the framing protocol matching processing module (802);
a framing protocol obtaining unit (S3), for obtaining the stable data framing protocol according to the displayed state of the state machine (S1) and the result of the judgment by the framing protocol matching processing module (802).

## Patentansprüche

1. Verfahren zur Unterstützung von Protokollen zur Bildung von Datenrahmen durch eine Mehrdienste-Übertragungs-Plattform, umfassend:
Entnahme (403) eines Pfadzusatz-Bytes, das einen Typ von Protokoll zur Bildung von Datenrahmen und eine zugehörige logische Anschluss-Nummer kennzeichnet, bei Empfang eines Rahmens der Synchronous Digital Hierarchy, wobei das Pfadkopfteil-Byte in der Struktur des Rahmens der Synchronous Digital Hierarchy konfiguriert ist, und eine Übereinstimmungs-Beziehung zwischen dem Pfadkopfteil-Byte und dem Typ von Protokoll zur Bildung von Datenrahmen vorkonfiguriert ist (401);
Beurteilung (404), ob das Pfadkopfteil-Byte mit einem Typ von Protokoll zur Bildung von Datenrahmen übereinstimmt, das der logischen Anschluss-Nummer entspricht;
Verarbeitung (406) von Daten des Rahmens der Synchronous Digital Hierarchy entsprechend dem übereinstimmenden Typ des Protokolls zur Bildung von Datenrahmen.

2. Verfahren gemäß Anspruch 1, wobei der Schritt der Entnahme folgendes umfasst:
Erhalten des Rahmens der Synchronous Digital Hierarchy;
Demapping des Rahmens der Synchronous Digital Hierarchy, um das Pfadkopfteil-Byte im Rahmen der Synchronous Digital Hierarchy und die zugehörige logische Anschluss-Nummer zu erhalten.

3. Verfahren gemäß Anspruch 1, wobei der Schritt der Beurteilung folgendes umfasst:
Wenn der Wert des Pfadzusatz-Bytes, das aus dem Rahmen der Synchronous Digital Hierarchy entnommen wurde, nicht gleich dem Wert eines Bytes ist, das den Typ des Protokolls zur Bildung von Datenrahmen kennzeichnet, Feststellen, dass das Pfadkopfteil-Byte nicht mit dem Byte übereinstimmt, das den Typ des Protokolls zur Bildung von Datenrahmen kennzeichnet;
andernfalls Feststellen, dass das Pfadkopfteil-Byte mit dem Byte übereinstimmt, das den Typ des Protokolls zur Bildung von Datenrahmen kennzeichnet.

4. Verfahren gemäß Anspruch 1, ferner umfassend:
Einrichten eines Zustandsautomaten zur Bildung von Datenrahmen, wobei die Zustände des Zustandsautomaten den Leerlauf-Zustand, den entriegelten Zustand, den synchronen Zustand, den verriegelten Zustand umfassen;
Erhalten eines aktuellen Zustandes des Zustandsautomaten;
Einkapseln von Übertragungs-Daten entsprechend dem aktuellen Zustand des Zustandsautomaten.

5. Verfahren gemäß Anspruch 4, wobei der Schritt des Einrichtens umfasst: Einstellen eines Anfangszustandes des Zustandsautomaten auf einen Leerlauf-Zustand.

6. Verfahren gemäß Anspruch 5, wobei der Schritt des Erhaltens umfasst:
Wenn das aus dem Rahmen der Synchronous Digital Hierarchy entnommene Pfadkopfteil-Byte 0 ist, Einstellen des Zustandsautomaten auf einen Leerlauf-Zustand;
wenn das Pfadkopfteil-Byte nicht mit einem Byte übereinstimmt, das den Typ eines Protokolls zur Bildung von Datenrahmen kennzeichnet, Einstellen des Zustandsautomaten auf einen entriegelten Zustand;
wenn das Pfadkopfteil-Byte mit dem Byte übereinstimmt, das den Typ des Protokolls zur Bildung von Datenrahmen kennzeichnet, Einstellen des Zustandsautomaten auf einen synchronen Zustand;
wenn der Zustandsautomat sich im synchronen Zustand befindet, Ausführen von Schritt b bis Schritt c eine vorher festgelegte Anzahl von Malen; wenn alle die vorher festgelegte Anzahl von Malen erhaltenen Pfadzusatz-Bytes dieselben sind, wie das Pfadkopfteil-Byte, das erhalten wurde, direkt bevor der Zustandsautomat in den synchronen Zustand eintrat, Einstellung des Zustandsautomaten auf einen verriegelten Zustand; andernfalls Einstellung des Zustandsautomaten auf einen synchronen Zustand.

7. Verfahren gemäß Anspruch 6, wobei der Schritt des Einkapselns umfasst:
Wenn sich der Zustandsautomat in einem verriegelten Zustand befindet, Einkapseln der Übertragungs-Daten entsprechend einem erhaltenen Typ von Protokoll zur Bildung von Datenrahmen und Einfügen des Pfadzusatz-Bytes, das den Typ des Protokolls zur Bildung von Datenrahmen kennzeichnet, in einen Pfad, der der logischen Anschluss-Nummer entspricht;
andernfalls Einfügen eines Pfadzusatz-Bytes, das anzeigt, dass kein Signal in den Pfad geliefert wird, der der logischen Anschluss-Nummer entspricht.

8. Verfahren gemäß Anspruch 1, wobei der Schritt des Konfigurierens umfasst:
In einem Pfad hoher Ordnung Einstellen eines Signal-Kennungs-Bytes C2 im Overhead des Pfades hoher Ordnung, so dass es dem Typ des Protokolls zur Bildung von Datenrahmen entspricht;
in einem Pfad niedriger Ordnung Einstellen eines Signal-Kennungs-Bytes V5 und eines Bytes zur automatischen Ersatzumschaltung K4 im Overhead des Pfades niedriger Ordnung, so dass es dem Typ des Protokolls zur Bildung von Datenrahmen entspricht.

9. Verfahren gemäß Anspruch 8, wobei der Schritt der Entnahme umfasst:
Erhalten des Rahmens der Synchronous Digital Hierarchy;
Demapping des Rahmens der Synchronous Digital Hierarchy, um das Pfadkopfteil-Byte im Rahmen der Synchronous Digital Hierarchy und die zugehörige logische Anschluss-Nummer zu erhalten.

10. Verfahren gemäß Anspruch 8, wobei der Schritt der Beurteilung folgendes umfasst:
Wenn der Wert des Pfadzusatz-Bytes, das aus dem Rahmen der Synchronous Digital Hierarchy entnommen wurde, nicht gleich dem Wert eines Bytes ist, das den Typ des Protokolls zur Bildung von Datenrahmen kennzeichnet, Feststellen, dass das Pfadkopfteil-Byte nicht mit dem Byte übereinstimmt, das den Typ des Protokolls zur Bildung von Datenrahmen kennzeichnet;
andernfalls Feststellen, dass das Pfadkopfteil-Byte mit dem Byte übereinstimmt, das den Typ des Protokolls zur Bildung von Datenrahmen kennzeichnet.

11. Vorrichtung zur Unterstützung von Protokollen zur Bildung von Datenrahmen durch eine Mehrdienste-Übertragungs-Plattform, umfassend:
Ein Datenrahmenbildungs-Verarbeitungs-Modul (81), ein Mapping-/Demapping-Verarbeitungs-Modul (82), das mit dem Datenrahmenbildungs-Verarbeitungs-Modul (81) verbunden ist, und ferner umfasst:
Ein Modul zur Verarbeitung des Protokolls zur Bildung von Datenrahmen (80), das mit dem Datenrahmenbildungs-Verarbeitungs-Modul (81), bzw. mit dem Mapping-/Demapping-Verarbeitungs-Modul (82) gekoppelt ist, um ein Protokoll zur Bildung von Datenrahmen und eine zugehörige logische Anschluss-Nummer, die von einer gegenüberliegenden Einrichtung unterstützt wird, die konfiguriert ist, mit der Mehrdienste-Übertragungs-Plattform-Einrichtung zu kommunizieren, entsprechend einem Pfadkopfteil-Byte, das in einem Rahmen übertragen wird, der von der gegenüberliegenden Einrichtung gesendet wird, zu erkennen, und das Datenrahmenbildungs-Verarbeitungs-Modul zu steuern, dass es Übertragungs-Daten in einen Rahmen einkapselt, der ein Pfadkopfteil-Byte überträgt, das ein entsprechendes Protokoll zur Bildung von Datenrahmen kennzeichnet.

12. Vorrichtung gemäß Anspruch 11, wobei das Modul zur Verarbeitung des Protokolls zur Bildung von Datenrahmen (80) umfasst:
Ein Modul zur Entnahme / zum Einfügen des Pfadkopfteils (801) zum Einfügen eines Pfadzusatz-Bytes, das das Protokoll zur Bildung von Datenrahmen kennzeichnet, wenn das Mapping- /Demapping-Verarbeitungs-Modul (82) das Mapping der Übertragungs-Daten durchführt, und zum Erhalten des Pfadzusatz-Bytes, das das Protokoll zur Bildung von Datenrahmen kennzeichnet, wenn das Mapping-/Demapping-Verarbeitungs-Modul (82) das Demapping der empfangenen Daten durchführt;
Ein Modul zur Verarbeitung der Übereinstimmung des Protokolls zur Bildung von Datenrahmen (802), das mit dem Modul zur Entnahme / zum Einfügen des Pfadkopfteils (801) gekoppelt ist, um zu beurteilen, ob das Protokoll zur Bildung von Datenrahmen, das von dem Pfadkopfteil-Byte, das von dem Modul zur Entnahme / zum Einfügen des Pfadkopfteils (801) entnommen wird, **gekennzeichnet** wird, konfiguriert ist, ein Protokoll zur Bildung von Datenrahmen, das von der Mehrdienste-Übertragungs-Plattform-Einrichtung unterstützt wird, anzupassen und das angepasste Protokoll zur Bildung von Datenrahmen an das Datenrahmenbildungs-Verarbeitungs-Modul (81) und das Modul zur Entnahme / zum Einfügen des Pfadkopfteils (801) zu senden.

13. Vorrichtung gemäß Anspruch 12, wobei das Modul zur Verarbeitung des Protokolls zur Bildung von Datenrahmen (82) ferner umfasst:
Ein Zustands-Verarbeitungs-Modul (803), um ein stabiles Protokoll zur Bildung von Datenrahmen entsprechend dem Ergebnis der Beurteilung durch das Modul zur Verarbeitung der Übereinstimmung des Protokolls zur Bildung von Datenrahmen (802) zu erhalten, und das erhaltene stabile Protokoll zur Bildung von Datenrahmen zum Datenrahmenbildungs-Verarbeitungs-Modul (81) und zum Modul zur Verarbeitung der Übereinstimmung des Protokolls zur Bildung von Datenrahmen (802) zu senden.

14. Vorrichtung gemäß Anspruch 13, wobei das Zustands-Verarbeitungs-Modul (803) umfasst:
Einen Zustandsautomaten (S1) zur Anzeige eines Zustandes des Protokolls zur Bildung von Datenrahmen;
eine Zustandsautomaten-Steuerungseinheit (S2) zur Steuerung des Zustandes, der vom Zustandsautomaten (S1) angezeigt wird, entsprechend dem Ergebnis der Beurteilung durch das Modul zur Verarbeitung der Übereinstimmung des Protokolls zur Bildung von Datenrahmen (802);
eine Einheit zum Erhalten des Protokolls zur Bildung von Datenrahmen (S3), um ein stabiles Protokoll zur Bildung von Datenrahmen entsprechend dem angezeigten Zustand des Zustandsautomaten (S1) und des Ergebnisses der Beurteilung durch das Modul zur Verarbeitung der Übereinstimmung des Protokolls zur Bildung von Datenrahmen (802) zu erhalten.

## Revendications

1. Procédé de prise en charge de protocoles de tramage de données par un dispositif à plate-forme de transport multiservice comprenant :
l'extraction (403) d'un octet supplémentaire de chemin d'accès identifiant un type de protocole de tramage de données et un numéro de port logique correspondant lors de la réception d'une trame de hiérarchie numérique synchrone, dans lequel l'octet supplémentaire de chemin d'accès est configuré dans la structure de la trame de hiérarchie numérique synchrone et dans lequel une relation de correspondance est préconfigurée (401) entre l'octet supplémentaire de chemin d'accès et le type de protocole de tramage de données ;
une évaluation (404) permettant de déterminer si l'octet supplémentaire de chemin d'accès concorde avec un type de protocole de tramage de données correspondant au numéro de port logique ;
le traitement (406) de données de la trame de hiérarchie numérique synchrone en fonction du type concordant du protocole de tramage de données.

2. Procédé selon la revendication 1, dans lequel l'étape d'extraction comprend :
l'obtention d'une trame de hiérarchie numérique synchrone ;
le démappage de la trame de hiérarchie numérique synchrone pour obtenir l'octet supplémentaire de chemin d'accès dans la trame de hiérarchie numérique synchrone et le numéro de port logique correspondant.

3. Procédé selon la revendication 1, dans lequel l'étape d'évaluation comprend :
si la valeur de l'octet supplémentaire de chemin d'accès extraite de la trame de hiérarchie numérique synchrone n'est pas égale à la valeur d'un octet identifiant le type de protocole de tramage de données, une évaluation permettant de déterminer si l'octet supplémentaire de chemin d'accès concorde ou non avec l'octet identifiant le type de protocole de tramage de données ;
autrement, une évaluation permettant de déterminer si l'octet supplémentaire de chemin d'accès concorde ou non avec l'octet identifiant le type de protocole de tramage de données.

4. Procédé selon la revendication 1, comprenant en outre :
l'établissement d'une machine d'état pour le tramage de données, les états de la machine d'état comprenant l'état de repos, l'état déverrouillé, l'état synchrone et l'état verrouillé ;
l'obtention de l'état en cours de la machine d'état ;
l'encapsulation de données de transmission selon l'état en cours de la machine d'état.

5. Procédé selon la revendication 4, dans lequel l'étape d'établissement comprend : l'assignation d'un état initial de la machine d'état à un état de repos.

6. Procédé selon la revendication 5, dans lequel l'étape d'obtention comprend :
lorsque l'octet supplémentaire de chemin d'accès extrait de la trame de hiérarchie numérique synchrone est 0, l'assignation de la machine d'état à un état de repos ;
lorsque l'octet supplémentaire de chemin d'accès ne concorde pas avec un octet identifiant le type de protocole de tramage de données, l'assignation de la machine d'état à un état déverrouillé ;
lorsque l'octet supplémentaire de chemin d'accès concorde avec l'octet identifiant le type de protocole de tramage de données, l'assignation de la machine d'état à un état synchrone ;
lorsque la machine d'état se trouve à l'état synchrone, l'exécution des étapes b et c un nombre prédéterminé de fois ; si tous les octets de service de chemin d'accès obtenus ledit nombre prédéterminé de fois sont identiques à un octet supplémentaire de chemin d'accès obtenu juste avant que la machine d'état ne passe à l'état synchrone, l'assignation de la machine d'état à un état verrouillé ; autrement, l'assignation de la machine d'état à un état synchrone.

7. Procédé selon la revendication 6, dans lequel l'étape d'encapsulation comprend :
si la machine d'état se trouve à l'état verrouillé, l'encapsulation des données de transmission selon un type de protocole de tramage de données obtenu et l'insertion de l'octet supplémentaire de chemin d'accès identifiant le type de protocole de tramage de données dans un chemin d'accès correspondant au numéro de port logique ;
autrement, l'insertion d'un octet supplémentaire de chemin d'accès indiquant qu'aucun signal n'est équipé dans le chemin d'accès correspondant au numéro de port logique.

8. Procédé selon la revendication 1, dans lequel l'étape de configuration comprend :
dans un chemin d'accès d'ordre supérieur, l'établissement d'un octet d'étiquetage de signal C2 dans un supplément de chemin d'accès d'ordre supérieur pour correspondre au type de protocole de tramage de données ;
dans un chemin d'accès d'ordre inférieur, l'établissement d'un octet d'étiquetage de signal V5 et d'un octet de commutation de protection automatique K4 dans un supplément de chemin d'accès d'ordre inférieur pour correspondre au type de protocole de tramage de données.

9. Procédé selon la revendication 8, dans lequel l'étape d'extraction comprend :
l'obtention d'une trame de hiérarchie numérique synchrone ;
le démappage de la trame de hiérarchie numérique synchrone pour obtenir l'octet supplémentaire de chemin d'accès dans la trame de hiérarchie numérique synchrone et le numéro de port logique correspondant.

10. Procédé selon la revendication 8, dans lequel l'étape d'évaluation comprend :
si la valeur de l'octet supplémentaire de chemin d'accès extraite de la trame de hiérarchie numérique synchrone n'est pas égale à la valeur d'un octet identifiant le type de protocole de tramage de données, une évaluation permettant de déterminer si l'octet supplémentaire de chemin d'accès concorde ou non avec l'octet identifiant le type de protocole de tramage de données ;
autrement, une évaluation permettant de déterminer si l'octet supplémentaire de chemin d'accès concorde ou non avec l'octet identifiant le type de protocole de tramage de données.

11. Appareil de prise en charge de protocoles de tramage de données par un dispositif à plate-forme de transport multiservice,
comprenant :
un module de traitement de tramage de données (81), un module de traitement de mappage/démappage (82) connecté avec le module de traitement pour le tramage de données (81),
et comprenant en outre :
un module de traitement de protocole de tramage (80), associé respectivement au module de traitement de tramage de données (81) et au module de traitement de mappage/démappage (82), permettant d'identifier un protocole de tramage de données et un numéro de port logique correspondant pris en charge par un dispositif opposé, ledit dispositif étant configuré pour communiquer avec le dispositif de plate-forme de transport multiservice en fonction d'un octet supplémentaire de chemin d'accès transporté dans une trame envoyée par le dispositif opposé, et permettant de contrôler le module de traitement de tramage de données de manière à encapsuler des données de transmission dans une trame transportant un octet supplémentaire de chemin d'accès identifiant un protocole de tramage de données correspondant.

12. Appareil selon la revendication 11, dans lequel le module de traitement de protocole de tramage (80) comprend :
un module d'extraction/insertion de données de service de chemin d'accès (801) permettant d'insérer un octet supplémentaire de chemin d'accès identifiant le protocole de tramage de données lorsque le module de traitement de mappage/démappage (82) mappe les données de transmission et permettant d'obtenir l'octet supplémentaire de chemin d'accès identifiant le protocole de tramage de données lorsque le module de traitement de mappage/démappage (82) démappe les données reçues ;
un module de traitement d'association d'un protocole de tramage (802) associé au module d'extraction/insertion de données de service de chemin d'accès (801) permettant d'évaluer si le protocole de tramage de données identifié par l'octet supplémentaire de chemin d'accès extrait par le module d'extraction/insertion de données de service de chemin d'accès (801) est configuré pour concorder avec un protocole de tramage de données pris en charge par le dispositif de plate-forme de transport multiservice et permettant d'envoyer le protocole de tramage de données concordant avec le module de traitement de tramage de données (81) et avec le module d'extraction/insertion de données de service de chemin d'accès (801).

13. Appareil selon la revendication 12, dans lequel le module de traitement de protocole de tramage (82) comprend en outre :
un module de traitement d'état (803) permettant d'obtenir un protocole de tramage de données stable en fonction du résultat de l'évaluation par le module de traitement d'association d'un protocole de tramage (802) et permettant d'envoyer le protocole de tramage de données stable obtenu au module de traitement de tramage de données (81) et au module de traitement d'association d'un protocole de tramage (802).

14. Appareil selon la revendication 13, dans lequel le module de traitement d'état (803) comprend :
une machine d'état (S1) permettant d'afficher un état de protocole de tramage de données ;
une unité de contrôle de machine d'état (S2) permettant de contrôler l'état affiché par la machine d'état (S1) en fonction du résultat de l'évaluation par le module de traitement d'association d'un protocole de tramage (802) ;
une unité permettant d'obtenir un protocole de tramage (S3) de manière à obtenir un protocole de tramage de données stable en fonction de l'état affiché de la machine d'état (S1) et du résultat de l'évaluation par le module de traitement d'association d'un protocole de tramage (802).
